# EUROPEAN PATENT SPECIFICATION

(11) **EP 3 082 999 B1**
(45) Date of publication and mention of the grant of the patent: **07.02.2018**
(21) Application number: 14833350.3
(22) Date of filing: 19.12.2014
(51) Int. Cl.: B01D 33/073, B01D 33/21, B01D 33/46, B01D 33/48, B01D 33/80

(54) **A FILTER APPARATUS**
EINE FILTERVORRICHTUNG
APPAREIL FILTRE

(30) Priority: 20.12.2013 FI 20136300
(43) Date of publication of application: 26.10.2016
(73) Proprietor: Outotec (Finland) Oy, 02230 Espoo (FI)
(72) Inventor: YLISIURUA, Hannu, FI-53850 Lappeenranta (FI)
(74) Representative: Kolster Oy Ab
(86) International application number: PCT/FI2014/051030
(87) International publication number: WO 2015/092152

(56) References cited:
- WO-A1-99/15255
- WO-A1-2013/117813
- GB-A- 2 455 643

## Description

### FIELD OF THE INVENTION

The present invention relates to a filter apparatus according to the preamble of claim 1.

The present invention relates also to a method for controlling a filter apparatus according to the preamble of claim 7.

### BACKGROUND OF THE INVENTION

Filtration is a widely used process whereby a slurry or solid liquid mixture is forced through a media, with the solids retained on the media and the liquid phase passing through. Examples of filtration types include depth filtration, pressure and vacuum filtration, and gravity and centrifugal filtration.

Both pressure and vacuum filters are used in the dewatering of mineral concentrates. Pressure filtration is based on the generation of an overpressure within a filtration chamber. Consequently, solids are deposited onto the surface of the filter medium and filtrate flows through the filter medium into the filtrate channels. Pressure filters often operate in batch mode because continuous cake discharge is more difficult to achieve.

Vacuum filtration is based on producing a suction within the filtrate channels and thereby forming a cake of mineral on the surface of the filter medium. The most commonly used filter types in vacuum filters are filter cloths and ceramic filters. There exists several types of vacuum filters, ranging from belt filters to drums. The present invention can be used in rotary vacuum drum filters and in rotary vacuum disc filters.

Rotary vacuum drum filters and rotary vacuum disc filters are used for the filtration of relatively free filtering suspensions on a large scale, such as the dewatering of mineral concentrates. The dewatering of mineral concentrates requires large capacity in addition to producing a cake with low moisture content.

The vacuum drum filter may comprise a cylindrical support structure rotating around a longitudinal shaft forming a centre axis for the drum. There are a plurality of filter plates arranged on the outer surface of the cylinder. Each filter plate forms a portion of the cylindrical outer surface of the cylinder. Each filter plate is during each revolution of the shaft displaced for a certain period into a slurry basin situated below the shaft. The filer plate rises out of the basin when the revolution of the shaft proceeds. When the filter plate is submerged in the slurry basin a cake forms onto the outer surface of the filter plate due to the vacuum within the filter plate. Once the filter plate comes out of the basin, the pores are emptied as the cake is deliquored for a predetermined time which is essentially limited by the rotation speed of the drum. The cake can be discharged by a back-pulse of air and/or by scraping, after which the cycle begins again. The filter plates are advantageously made of porous ceramic.

The vacuum disc filter may comprise a plurality of filter discs arranged in line co-axially around a rotatable centre shaft. Each filter disc may be formed of a number of individual filter sectors, called filter plates, that are mounted circumferentially in a radial plane around the centre shaft to form the filter disc. Each filter plate is during each revolution of the shaft displaced for a certain period into a slurry basin situated below the shaft. The filter plate rises out of the basin when the revolution of the shaft proceeds. When the filter plate is submerged in the slurry basin a cake forms onto the surfaces of the filter plate due to the vacuum within the filter plate. Once the filter plate comes out of the basin, the pores are emptied as the cake is deliquored for a predetermined time which is essentially limited by the rotation speed of the disc. The cake can be discharged by a back-pulse of air or by scraping, after which the cycle begins again.

WO 99/15255 discloses a method and an apparatus for monitoring, diagnosing, operating, and controlling various parameters and processes of rotary filters. Table 3 in the publication discloses the use of proximity sensors, ultrasonic sensors as well as laser and photonic (LED arrays) ranging devices for determining the cake height on the rotary filter drum.

GB 2 455 643 discloses an apparatus for separating mixed materials of different flowability. The apparatus comprises a drum that is supported on a rotatble shaft having a centre axis. The drum has a perforated peripheral surface forming a filter surface. A scraper blade is acting on the outer surface of the drum for scraping a cake from the filter surface. An actuator is used to adjust the distance of the scraper blade from the filter surface.

WO 2013/117813 discloses a method and an apparatus for reducing the thickness of a precoat layer accumulated on a filtering surface of a filter disc is a disc filter apparatus. A scraper blade is acting on the opposite outer surfaces of each of the filter discs for scraping a cake from the filter surface. An common actuator is used to adjust the distance of each of the scraper blades from the respective filter surfaces.

A new scraper blade is in many prior art solutions mounted into a certain static initial position during the installation of the new scraper blade. The scraper blades are then readjusted manually when the tip of the scraper blade has worn to a certain extent. This means that the filter apparatus has to be stopped during adjustment of the scraper blade due to wear of the tip of the scraper blade. The ceramic filter surface is brittle and very likely to break if the scraper blade comes into contact with the filter surface. The filter surface has usually not a perfect form of a cylinder or a plane and this has to be taken into account when adjusting the scraper blade. A protrusion at some point in the filter surface means that the tip of the scraper blade has to be adjusted at a certain distance from the tip in order to eliminate possible collisions of the scraper blade with the filter surface. This might lead to losses in the yield.

### BRIEF DESCRIPTION OF THE INVENTION

An object of the present invention is to present an improved filter apparatus and an improved method of controlling the filter apparatus.

The object of the invention is achieved with a filter apparatus according to claim 1.

The object of the invention is further achieved with a method for controlling a filter according to claim 7.

The filter apparatus comprises:
a cylindrical drum that is supported on a rotatable shaft having a centre axis,
a number of filter plates attached to the drum, the filter plates forming a filter surface,
a scraper blade for scraping a cake from the filter surface,
an angular position sensor for measuring the angular position of the drum.

The filter apparatus comprises further:
an actuator for continuously adjusting the distance of a tip of the scraper blade from the filter surface based on the predetermined topology of the filter surface at each angular position of the drum.

The method comprises the steps of:
measuring the topology of the filter surface with the at least one laser,
storing the topology of the filter surface together with the corresponding angular position information of the drum into the memory of the control device,
adjusting continuously the distance between a tip of the scraper blade and the filter surface with the actuator based on the stored topology of the filter surface.

The continuous adjustment of the scraper blade based on the measured topology of the filter surface means that the tip of the scraper blade can always be kept as near the filter surface as possible. This will result in a maximal yield. A maximum amount of cake can be scraped from the filter surface during each rotation of the drum. There is also no need to stop the filter apparatus during adjustment of the scraper blade. The productivity of the filter apparatus will thus increase. The automatic adjustment of the scraper blade minimizes the risk of contact between the scraper blade and the filter surface.

The use of at least one laser in the apparatus makes it also possible to calculate the produced cake volume. The thickness of the cake on the filter surface can be measured with the at least one laser at each angular position of the drum.

### BRIEF DESCRIPTION OF THE DRAWINGS

In the following the invention will be described in greater detail by means of example embodiments with reference to the accompanying drawings, in which
Figure 1 shows a perspective top view of a drum filter apparatus,
Figure 2 shows a cross section of the drum and the scraper in a topology measurement stage,
Figure 3 shows a cross section fo the drum and the scraper in a production stage,
Figure 4 shows the principle of the measurement of the topolgy of the surface of the drum in cylindrical coordinates,
Figure 5 is a perspective top view of a disc filter apparatus,
Figure 6 is a perspective top view of the drum of figure 5.

### DETAILED DESCRIPTION OF EMBODIMENTS OF THE INVENTION

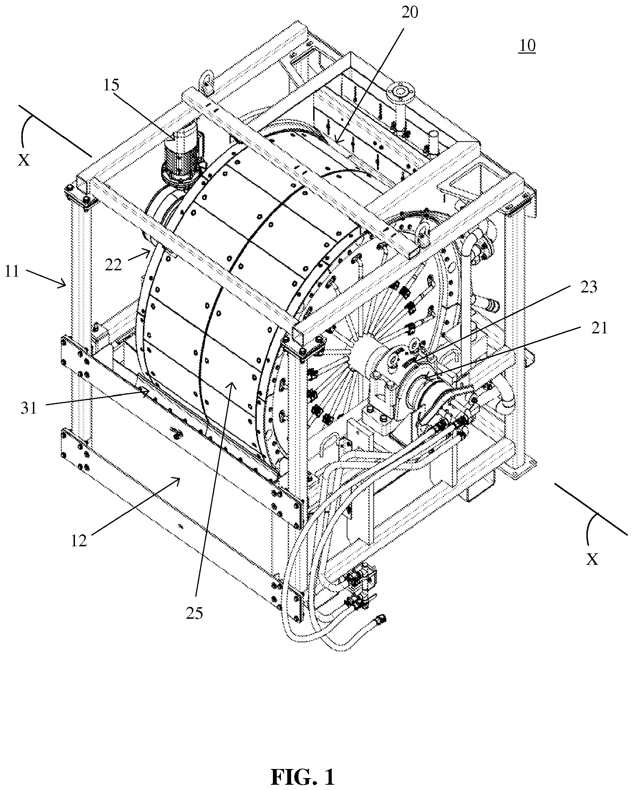

Figure 1 is a perspective top view illustrating a drum filter apparatus. The drum filter apparatus 10 comprises a frame 11, a cylindrical drum 20 supported within the frame 11, a slurry basin 12 under the drum 20 and a scraper 31 scraping the cake from the drum 20. The drum 20 comprises a shaft 21 that is supported at both ends with bearings 22, 23 on the frame 11. The drum 20 comprises further filter plates 25 arragend of the outer curcumference of the drum 20. The shaft 21 and thereby also the drum 20 is rotatated by an electric motor 15 through a gear. The drum 20 rotates around a centre axis X-X forming the longitudinal centre axis X-X of the shaft 21.

The number of the ceramic filter plates 25 on the drum 20 may vary depending on the size of the drum 20. The diameter of the drum 20 may be in the order of 1 to 5 meter and the length of the drum 20 may be in the order of 2 to 10 meter. The filtering area of the filter plates 25 may be in the order of 10 to 200 m². A lower portion of the drum 20 is submerged in the slurry basin 12. The outer surface of the ceramic filter plate 25 has a microporous structure so that water can enter into the filter plate 25. The interior of the filter plate 25 is porous so that water can travel within the filter plate 25. The inner surface and the edge surfaces of the filter plate 25 are impervious to water. This means that water can penetrate into the filter plate 25 only through the outer surface of the filter plate 25.

The interior of each filter plate 25 is connected to a collector piping provided in the drum 20. The interior of the filter plate is thus subjected to a vacuum. Water is thus sucked through the outer surface of the filter plates 25 into the interior of the filter plates 25 and further with the collectro piping out from the drum 20. As the drum 20 rotates, the filter plates 25 move into and through the basin 12. Each filter plate 25 goes through different process phases during one revolution of the drum 20. In a cake forming phase, the liquid is passing through the outer surfaces of the filter plate 25 into the interior of the filter plate 25 when it travels through the slurry, and a cake is formed on the outer surface of the filter plate 25. The filter plate 25 enters the cake drying phase after it leaves the basin 12. If cake washing is required, it is done in the beginning of the drying phase. In the cake discharge phase the cake is scraped off from the outer surface of the filter plate 25 by ceramic scrapers so that a thin cake is left on the outer surface of the filter plate 25. There is thus a small gap between the scraper 30 and the outer surface of the filter plate 25. In the backflush phase of each rotation, water (filtrate) is pumped in a reverse direction from the inside of the filter plate 25 through the filter plate 25 to the outside of the filter plate 25. The backflush water washes off the residual cake and cleans the pores of the filter plate 25.

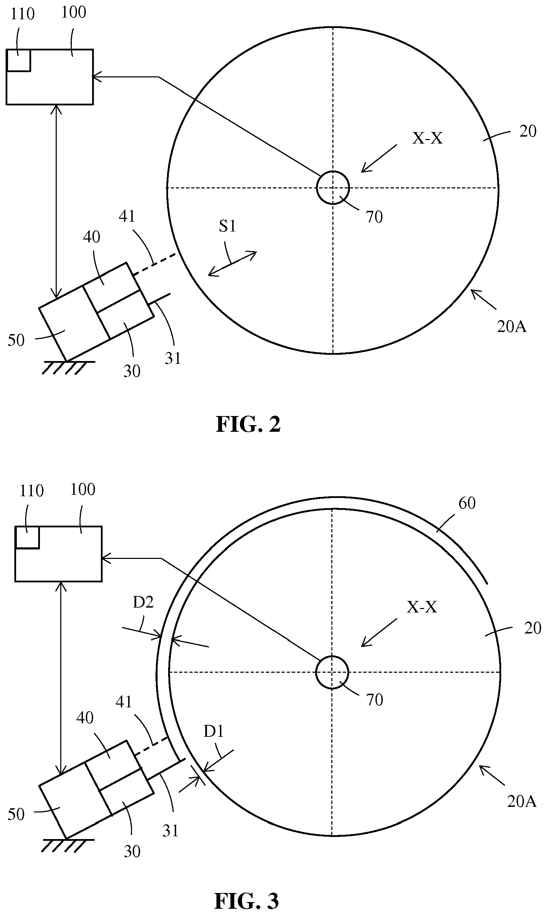

Figure 2 shows a cross section of the drum and the scraper in a topology measurement stage. The filter plates shown in figure 1 form an essentially continuous cylindrical filter surface 20A on the cylindrical drum 20 rotating around the center axis X-X. The scraper blade 31 is connected to an actuator 30 moving the scraper blade 31 back and forth in the first direction S1 in order to vary the distance of the edge of the scraper blade 31 from the filter surface 20A. There is further a laser 40 producing a laser beam 41 that is directed towards the filter surface 20A. The scraper blade 31 the actuator 30 and the laser 40 are located in a stationary casing 50 supported on the frame construction of the drum filter apparatus. There is further an angular position sensor 70 for determining the angular position of the drum 20 during rotation of the drum 20. The angular position sensor 70 transmits a signal corresponding to the angular position of the drum 20 to a control device 100. The control device 100 controls the actuator 30 and thereby the scraper blade 31. The control device 100 comprises a memory 110 for storing measurement information. The control device 100 receives distance information from the laser 40 and controls the scraper blade 31. The control device 100 receives further angular position information of the drum 20 from the angular position sensor 70. The topology of the filter surface 20A is measured with the laser 40. The drum 20 is rotated and the laser 40 measures the topology of the filter surface 20A. The laser 40 could comprise several point formed lasers or laser scanners along the axial X-X length of the drum 20.

Figure 3 shows a cross section of the drum and the scraper in a production stage. The laser 40 measures now the distance to the outer surface of the cake 60. The thickness D2 of the cake 60 is calculated in the control device 100 based on the measured distance and the topology of the filter surface 20A that was measured with the laser 40 in the previous stage. The information of the position of the drum 20 is received to the control device 100 from the angular position sensor 70. The control device 100 controls the position of the scraper blade 31 with the actuator 30 based on the topography of the filter surface 20A. The laser 40 measures the thickness D2 of the cake 60. The tip of the scraper blade 31 is positioned at a desired distance D1 from the filter surface 20A. The distance D1 determines the thickness of the cake 60 that is left on the filter surfac 20A after the scraper blade 31. The filter surface 20A is of a ceramic material. The tip of the scraper blade 31 would damage the filter surface 20A if it would contact the filter surface 20A. There must thus remain a small distance D1 between the tip of the scraper blade 31 and the filter surface 20A. The distance D1 should on the other hand be as small as possible in order to achieve a high yield.

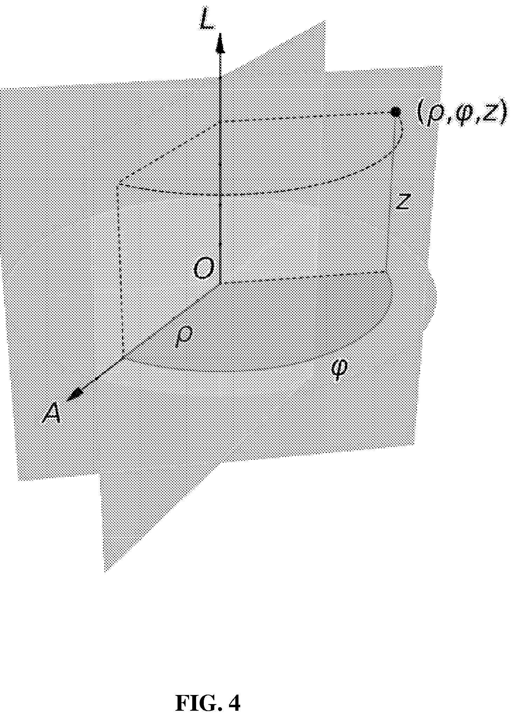

Figure 4 shows the principle of the measurement of the topology of the surface of the drum in cylindrical coordinates. The line L represents the centre axis X-X of the drum 20. The point O is on the centre axis X-X of the drum e.g. on one end surface of the drum 20. The line A represents a radial reference line being perpendicular to the centre axis X-X of the drum 20. The line A is thus on the end surface of the drum 20. A point (ρ, ϕ, z) on the surface of drum 20 can be defined in cylindrical coordinates by the distance p measured from the centre O along the radial line A, the angle ϕ measured from the refence line A and the distance z measured along the line L. The distance z is the distance from the end surface of the drum 20 measured along the outer cylindrical surface of the drum 20 in a direction parallel to the centre axis X-X of the drum 20. The centre axis X-X of the drum 20 forms the reference line for the radial distance p measurement. The radial distance p determines the height of the filter surface 20A of the drum 20 at the measured point.

A chart representing the surface of the drum 20 can thus be described with a finite number of cylindrical coordinates (p, ϕ, z). The measurement of the chart representing the surface of the drum 20 can be done with a distance measurement by point-formed lasers. The measurment of the chart representing the surface of the drum 20 can also be done with stationary mounted laser scanners. A 3-D image/model/chart of the surface of the drum 20 is formed during rotation of the drum 20. The angular position of the drum 20 at each moment during the rotation of the drum 20 is in both cases measured with an angular position sensor 70. The information from these measurements are collected into a chart respresented by cylindrical coordinates (p, ϕ, z). The finite number of cylindrical coordinates (ρ, ϕ, z) can be stored in the memory 110 of the control device 100.

The angular position sensor 70 can be based on an optical puls sensor or on a resolver. A rotating optical puls sensor comprises a code disc provided with a pattern of holes. A light source provided with a lense system sends light towards the code disc. There is a light receiver system on the opposite side of the code disc. The pattern of light received by the light receiver system is depending on the angular position of the code disc. The code disc rotates with the shaft 21 of the drum 20 and determines thus the angular position of the shaft 21 of the drum 20. A resolver comprises a rotor provided with a primary winding and a stator provided with two secondary windings. The rotor is rotating with the shaft 21 of the drum 20 and the stator is stationary. A sinusoidal voltage is fed into the primary winding, which produces a magnetic field around the rotor. The magnetic field induces a current into the secondary windings. The secondary windings are positioned at an angle of 90 degreees in relation to each other. The voltages measured from the secondary windings have thus a phase shift of 90 degrees and can be considered to constitute sinus and cosinus signals. The angle of the rotor i.e. the angular position of the shaft 21 of the drum 20 can thus be determined as arctan of the relation of the voltages in the secondary windings.

The scraper blade 31 is kept as close to the filter surface 20A of the drum 20 as possible without touching the filter surface 20A of the drum 20. The control of the scarper blade 31 is based on the chart of the filter surface 20A of the drum 20 produced during the measurement phase. The angular position of the drum 20 is determined with the angular position sensor 70. The scraper blade 31 is controlled so that there remains a small distance between the tip of the scaper blade 31 and the outermost point (p, z) of the drum 20 in each angular position (ϕ). The slowness in the control is taken into account by avoiding also the outermost point (p, z) of the drum 20 in the angular position (ϕ+1).

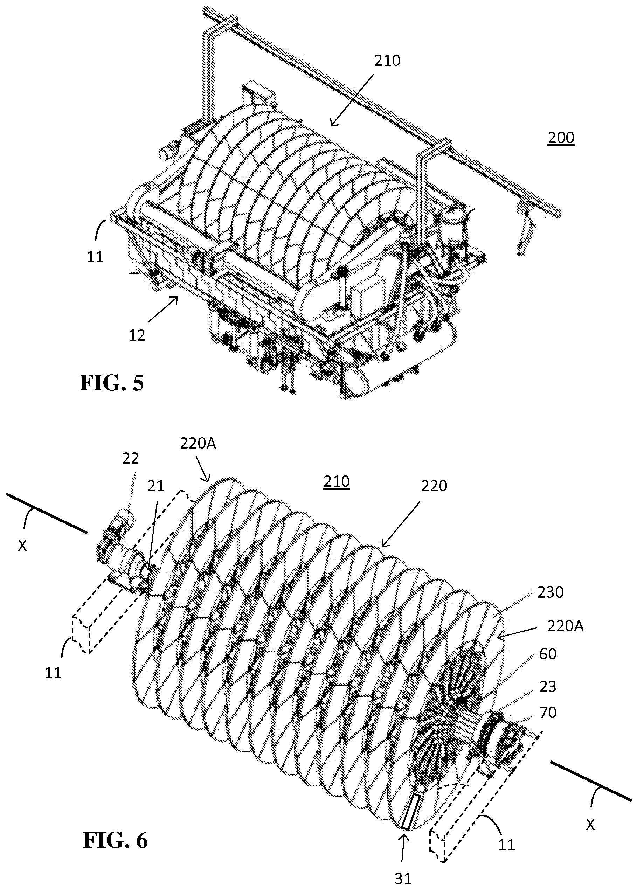

Figure 5 is a perspective top view of a disc filter apparatus. Figure 6 is a perspective top view of the drum of figure 5.

The disc filter apparatus 200 comprises a cylindrical-shaped drum 210 that is supported by bearings 22 and 23 on a frame 11. The drum 210 is rotatable about a longitudial centre axis X-X such that a lower portion of the drum 210 is submerged in a slurry basin 12 located below the centre axis X-X. The drum 210 is rotated by a motor e.g. an electric motor through a gear box (not shown in the figures). The drum 210 comprises a plurality of ceramic filter discs 220 arranged in line co-axially around the centre axis X-X of the drum 210. The number of the ceramic filter discs 220 on the drum 210 may be in the range of 2 to 20. The diameter of each disc 220 may be in the range of 1,5 to 4 m. Each filter disc 220 is formed of a number of ceramic filter plates 230 having essentially the form of a truncated sector in a circle having the centre at the longitudinal centre axis X-X of the drum 210. The filter plates 230 are attached from their innermost edge to a support structure on the drum 210. The filter plates 230 are mounted circumferentially in a radial plane around the drum 210 to form an essentially continuous and planar filter surface 220A on each side surface of the disc 220. The number of filter plates 230 in one filter disc 220 may be in the range of 12 to 15. A scraper 31 is arranged against each side surface of the disc 220 for scraping the cake from the filter surfaces 220A.

Each filter plate 230 is provided with a fluid duct from the interior of the filter plate 230 to an axially X-X directed collector piping 60 provided within the support structure of the drum 210. The consecutive filter plates 230 in the different filter discs 210 in an axial X-X row form a group of filter plates. The filter plates 230 in each axial X-X group are advantageously connected to the same axially X-X extending collector pipe 60. The number of axially X-X extending collector pipes 60 in the drum 210 is thus the same as the number of filter plates 230 on one filter disc 220. The collector pipes 60 are connected to a distributing valve 70 disposed on the shaft 21 of the drum 210. The distributing valve 70 transmits vacuum or overpressure to the filter plates 230.

The principles shown in figure 2 for determining the topology of the filter surface 20A of the drum 20 in the drum filter apparatus 10 can also be applied to determining the topology of the filter surfaces 220A in the disc filter apparatus 200. The principles shown in figure 3 for controlling the scraper blade 31 in the drum filter apparatus 10 can also be applied for controlling the scraper blades 31 in the disc filter apparatus 200. The angular position of the drum 210 in the disc filter apparatus 200 can be determined with an angular sensor 70 in the same way as in figures 2 and 3. The angular position of the drum 210, the distance from the center X-X axis of the drum 210 and the height from the side surface of the disc 220 determines the topology point of the filter surface 220A. The laser 40 measures the height of the point from the side surface of the disc 220.

Upon reading the present application, it will be obvious to a person skilled in the art that the inventive concept can be implemented in various ways. The invention and its embodiments are not limited to the examples described above but may vary within the scope of the claims.

## Claims

1. A filter apparatus (10, 200) comprising:
a drum (20, 210) that is supported on a rotatable shaft (21) having a centre axis (X-X),
a number of filter plates (25, 230) being attached to the drum (20, 210), said filter plates forming a filter surface (20A, 220A),
a scraper blade (31) for scraping a cake (60) from the filter surface (20A, 220A),
an angular position sensor (70) for measuring the angular (ϕ) position of the drum (20, 210),
**characterized in that** the filter apparatus (10, 200) further comprises:
an actuator (30) for continuously adjusting the distance (D1) of a tip of the scraper blade (31) from the filter surface (20A) based on the predetermined topology of the filter surface (20A) at each angular (ϕ) position of the drum (20).

2. A filter apparatus according to claim 1, **characterized in that** the apparatus comprises further at least one laser (40) for measuring the thickness of the cake (60) on the filter surface (20A, 220A).

3. A filter apparatus according to claim 1 or 2, **characterized in that** the apparatus comprises further a control device (100) for controlling the actuator (30) based on the topology of the filter surface (20A, 220A).

4. A filter apparatus according to claim 3, **characterized in that** the control device (100) comprises a memory (110) for storing the topology of the filter surface (20A, 220A).

5. A filter apparatus according to any one of claims 1 to 4, **characterized in that** the filter surface (20A) is a cylindrical outer surface of a drum (20) in a drum filter apparatus (10).

6. A filter apparatus according to any one of claims 1 to 4, **characterized in that** the filter surface (220A) is a planar outer side surface of a disc (220) in a disc filter apparatus (200).

7. A method for controlling a filter apparatus (10, 200) comprising:
a cylindrical drum (20, 210) that is supported on a rotatable shaft (21) having a centre axis (X-X),
a number of filter plates (25, 230) being attached to the drum (20, 210), said filter plates (25, 230) forming a filter surface (20A, 220A),
a scraper blade (31) for scraping a cake (60) from the filter surface (20A, 220A),
at least one laser (40),
an angular position sensor (70),
a control device (100) provided with a memory (110),
said method comprising the steps of:
measuring the topology of the filter surface (20A, 220A) with the at least one laser (40),
storing the topology of the filter surface (20A, 220A) together with the corresponding angular (ϕ) position information of the drum (20, 210) into the memory (110) of the control device (100),
adjusting continuously the distance (D1) between a tip of the scraper blade (31) and the filter surface (20A, 220A) with the actuator (30) based on the stored topology of the filter surface (20A, 220A).

8. A method according to claim 7 comprising the further step of:
measuring the thickness of the cake (60) formed on the filter surface (20A, 220A) with the laser (40).

## Patentansprüche

1. Filtervorrichtung (10, 200) umfassend:
eine Trommel (20, 210), die auf einer drehbaren Welle (21) mit einer Mittelachse (X-X) gelagert ist,
eine Anzahl von Filterplatten (25, 230), die an der Trommel (20, 210) befestigt sind, wobei die Filterplatten eine Filterfläche (20A, 220A) bilden,
eine Schaberklinge (31) zum Schaben eines Kuchens (60) von der Filterfläche (20A 220A),
einen Winkelpositionssensor (70) zum Messen der Winkel (ϕ) -Position der Trommel (20, 210),
**dadurch gekennzeichnet, dass** die Filtervorrichtung (10, 200) weiter umfasst:
einen Aktuator (30) zum kontinuierlichen Einstellen des Abstands (D1) einer Spitze der Schaberklinge (31) der Filterfläche (20A) basierend auf der vorgegebenen Topologie der Filteroberfläche (20A) an jeder Winkel (ϕ) -Position der Trommel (20).

2. Filtervorrichtung nach Anspruch 1, **dadurch gekennzeichnet, dass** die Vorrichtung weiter mindestens einen Laser (40) zum Messen der Dicke des Kuchens (60) auf der Filterfläche (20A, 220A) umfasst.

3. Filtervorrichtung nach Anspruch 1 oder 2, **dadurch gekennzeichnet, dass** die Vorrichtung weiter eine Steuereinrichtung (100) zur Steuerung des Stellglieds (30) basierend auf der Topologie der Filterfläche (20A, 220A) aufweist.

4. Filtervorrichtung nach Anspruch 3, **dadurch gekennzeichnet, dass** die Steuereinrichtung (100) einen Speicher (110) zur Speicherung der Topologie der Filterfläche (20A, 220A) umfasst.

5. Filtervorrichtung nach einem der Ansprüche 1 bis 4, **dadurch gekennzeichnet, dass** die Filterfläche (20A) eine zylindrische Außenfläche einer Trommel (20) in einer Trommelfiltervorrichtung (10) ist.

6. Filtervorrichtung nach einem der Ansprüche 1 bis 4, **dadurch gekennzeichnet, dass** die Filterfläche (220A) eine ebene Außenseitenfläche einer Scheibe (220) in einer Scheibenfiltervorrichtung (200) ist.

7. Verfahren zum Steuern einer Filtervorrichtung (10, 200), umfassend:
eine Trommel (20, 210), die auf einer drehbaren Welle (21) mit einer Mittelachse (X-X) gelagert ist,
eine Anzahl von Filterplatten (25, 230), die an der Trommel (20, 210) befestigt sind, wobei die Filterplatten (25, 230) eine Filterfläche (20A, 220A) bilden,
eine Schaberklinge (31) zum Schaben eines Kuchens (60) von der Filterfläche (20A 220A),
mindestens einen Laser (40),
einen Winkelpositionssensor (70),
eine mit einem Speicher (110) versehene Steuereinrichtung (100),
wobei das Verfahren die Schritte umfasst:
Messen der Topologie der Filteroberfläche (20A, 220A) mit dem mindestens einen Laser (40),
Speichern der Topologie der Filteroberfläche (20A, 220A) zusammen mit der entsprechenden Winkel (ϕ) -Positionsinformation der Trommel (20, 210) in den Speicher (110) der Steuereinrichtung (100),
kontinuierliches Einstellen des Abstand (D1) zwischen einer Spitze der Schaberklinge (31) und der Filterfläche (20A, 220A) mit dem Aktuator (30) basierend auf der gespeicherten Topologie der Filterfläche (20A, 220A).

8. Verfahren nach Anspruch 7, umfassend den weiteren Schritt:
Messen der Dicke des auf der Filteroberfläche (20A, 220A) gebildeten Kuchens (60) mit dem Laser (40).

## Revendications

1. Appareil formant filtre (10, 200) comprenant :
un tambour (20, 210) qui est supporté sur un arbre rotatif (21) ayant un axe central (X-X),
un certain nombre de plaques de filtre (25, 230) attachées au tambour (20, 210), lesdites plaques de filtre formant une surface de filtre (20A, 220A),
une lame de racloir (31) pour racler un gâteau (60) depuis la surface de filtre (20A, 220A),
un capteur de position angulaire (70) pour mesurer la position angulaire (ϕ) du tambour (20, 210),
**caractérisé en ce que** l'appareil formant filtre (10, 200) comprend en outre :
un dispositif d'actionnement (30) pour continuellement ajuster la distance (D1) d'un bout de la lame de racloir (31) à partir de la surface de filtre (20A) sur la base de la topologie prédéterminée de la surface de filtre (20A) à chaque position angulaire (ϕ) du tambour (20).

2. Appareil formant filtre selon la revendication 1, **caractérisé en ce que** l'appareil comprend en outre au moins un laser (40) pour mesurer l'épaisseur du gâteau (60) sur la surface de filtre (20A, 220A).

3. Appareil formant filtre selon la revendication 1 ou 2, **caractérisé en ce que** l'appareil comprend en outre un dispositif de commande (100) pour commander le dispositif d'actionnement (30) sur la base de la topologie de la surface de filtre (20A, 220A).

4. Appareil formant filtre selon la revendication 3, **caractérisé en ce que** le dispositif de commande (100) comprend une mémoire (110) pour stocker la topologie de la surface de filtre (20A, 220A).

5. Appareil formant filtre selon l'une quelconque des revendications 1 à 4, **caractérisé en ce que** la surface de filtre (20A) est une surface extérieure cylindrique d'un tambour (20) dans un appareil formant filtre à tambour (10).

6. Appareil formant filtre selon l'une quelconque des revendications 1 à 4, **caractérisé en ce que** la surface de filtre (220A) est une surface latérale extérieure plane d'un disque (220) dans un appareil formant filtre à disque (200).

7. Procédé pour commander un appareil formant filtre (10, 200) comprenant :
un tambour cylindrique (20, 210) qui est supporté sur un arbre rotatif (21) ayant un axe central (X-X),
un certain nombre de plaques de filtre (25, 230) attachées au tambour (20, 210), lesdites plaques de filtre (25, 230) formant une surface de filtre (20A, 220A),
une lame de racloir (31) pour racler un gâteau (60) depuis la surface de filtre (20A, 220A),
au moins un laser (40),
un capteur de position angulaire (70),
un dispositif de commande (100) muni d'une mémoire (110),
ledit procédé comprenant les étapes de :
mesure de la topologie de la surface de filtre (20A, 220A) avec l'au moins un laser (40),
stockage de la topologie de la surface de filtre (20A, 220A) en même temps les informations de position angulaire correspondante (ϕ) du tambour (20, 210) dans la mémoire (110) du dispositif de commande (100),
ajustement continu de la distance (D1) entre un bout de la lame de racloir (31) et la surface de filtre (20A, 220A) avec le dispositif d'actionnement (30) sur la base de la topologie stockée de la surface de filtre (20A, 220A).

8. Procédé selon la revendication 7, comprenant l'étape supplémentaire de :
mesure de l'épaisseur de la croûte (60) formée sur la surface de filtre (20A, 220A) avec le laser (40).
